# EUROPÄISCHE PATENTSCHRIFT

(11) **EP 1 261 942 B1**
(45) Veröffentlichungstag und Bekanntmachung des Hinweises auf die Patenterteilung: **10.08.2005**
(21) Anmeldenummer: 01907313.9
(22) Anmeldetag: 08.03.2001
(51) Int. Cl.: G07C 9/00

(54) **FÜR DIE ORGANISATION VON MESSEN BESTIMMTES VERFAHREN ZUR ELEKTRONISCHEN AUSWAHL UND SAMMLUNG VON PROSPEKTUNTERLAGEN, SOWIE ANORDNUNG ZUR DURCHFÜHRUNG DES VERFAHRENS**
METHOD FOR ELECTRONICALLY SELECTING AND COLLECTING BROCHURES DESTINED FOR THE ORGANIZATION OF TRADE FAIRS, AND SYSTEM FOR CARRYING OUT SAID METHOD
PROCEDE D'ORGANISATION DE FOIRES PERMETTANT LA SELECTION ET LA COLLECTE ELECTRONIQUE DE PROSPECTUS, AINSI QUE DISPOSITIF PERMETTANT DE METTRE EN OEUVRE LE PROCEDE

(30) Priorität: 08.03.2000 CH 453002000; 02.05.2000 CH 854002000
(43) Veröffentlichungstag der Anmeldung: 04.12.2002
(73) Patentinhaber: Schmid, Peter, 4436 Oberdorf (CH)
(72) Erfinder: Schmid, Peter, 4436 Oberdorf (CH)
(74) Vertreter: Eder, Carl E.
(86) Internationale Anmeldenummer: PCT/CH2001/000149
(87) Internationale Veröffentlichungsnummer: WO 2001/067398

(56) Entgegenhaltungen:
- WO-A-87/03116
- WO-A-98/40840
- US-A- 4 654 793
- US-A- 4 806 743
- PATENT ABSTRACTS OF JAPAN vol. 1999, no. 09, 30. Juli 1999 (1999-07-30) & JP 11 096230 A (ATR CHINO EIZO TSUSHIN KENKYUSHO:KK), 9. April 1999 (1999-04-09)
- DONG-IL KO ET AL: "Personalized Virtual Exhibition Tour (PVET): an experiment for Internet collaboration" IEEE SMC'99 CONFERENCE PROCEEDINGS. 1999 IEEE INTERNATIONAL CONFERENCE ON SYSTEMS, MAN, AND CYBERNETICS (CAT. NO.99CH37028), IEEE SMC'99 CONFERENCE PROCEEDINGS. 1999 IEEE INTERNATIONAL CONFERENCE ON SYSTEMS, MAN, AND CYBERNETICS, TOKYO, JAPAN, 12-15, Seiten 25-29 vol.6, XP002142327 1999, Piscataway, NJ, USA, IEEE, USA ISBN: 0-7803-5731-0

## Beschreibung

### Technisches Gebiet

Die Erfindung betrifft ein für die Organisation und Betreibung von Messen und Ausstellungen bestimmtes Verfahren zur Auswahl, Erfassung und Sammlung von Dokumenten, Prospekten und dergleichen, sowie eine Anordnung zur Durchführung eines solchen Verfahrens.

### Stand der Technik

Es ist allgemein bekannt, dass die von den verschiedensten Messeständen mitgenommen Prospektunterlagen sehr schnell einen allenfalls mitgebrachten Aktenkoffer und/oder mehrere Papier- oder Plastiksäcke füllen, was vor allem bei einem längeren Auzenthalt in den Messeräumen mit der Zeit zu einer unangenehmen Last wird. Auch ist bekannt, dass die Archivierung von Dokumenten und Prospekten eines Messebesuches sehr aufwendig ist. So müssen die gesammelten Unterlagen zu Hause oder im Betrieb nochmals durchgesehen, aussortiert und abgelegt werden. In Firmen müssen die Messeunterlagen zudem mit Laufzetteln versehen in Umlauf gebracht werden. Danach werden sie bei einem Mitarbeiter oder zentral abgelegt. Die Wahrscheinlichkeit, dass die Informationen auch zu einem späteren Zeitpunkt jedem Mitarbeiter der Firma zur Verfügung stehen, ist erfahrungsgemäss sehr gering. Dies kann verschiedene Gründe haben. So ist entweder die Archivierungsmethode nicht genügend durchdacht und organisiert, so dass Prospekte, wenn sie wieder gebraucht werden, sehr oft nicht mehr auffindbar sind, oder es werden Unterlagen, von welchen man annimmt, dass man sie nicht mehr benötigt, weggeworfen.

Auch für den Anbieter bestehen nach dem bekannten System wesentliche Nachteile. So muss er für jede Messe eine genügend grosse Anzahl an Prospekten drucken lassen, was bekannterweise nicht nur sehr kostspielig ist, sondern auch frühzeitig vor Messebeginn in Auftrag gegeben werden muss, so dass die neuesten Entwicklungen und Informationen nicht immer auf den am Messestand abgegebenen Prospekten enthalten sind. Möchte zudem ein Messebesucher seine Adresse bei einem oder mehreren Ausstellern registrieren lassen, muss er heute eine Visitenkarte abgeben, oder es muss seine Adresse und andere persönlichen Daten, wie zum Beispiel eMail- und Internet-adressen, auf einem speziellen Formular aufgenommen werden. Diese Erfassung von zum Beispiel neuen Kundendaten muss nachträglich vom Aussteller elektronisch erfasst werden, was unter Umständen sehr zeitaufwendig sein kann.

Aus den beiden internationalen Offenlegungsschriften WO 98/40840 und WO 87/03116 sind bereits Verfahren und Einrichtungen zur elektronischen Auswahl und Sammlung von Prospektunterlagen an Messen und Ausstellungen bekannt. Diese Verfahren und Einrichtungen setzen aber einerseits den Einsatz eines Speichermediums in Form einer Diskette voraus, und sind andererseits weder mehrsprachenfähig noch für die Einbindung des Mediums Internet ausgestaltet, was wesentlich Nachteile für einen globalen, d.h. weltweiten Einsatz des Verfahrens und der Einrichtung zur Folge hat.

### Abriss der Erfindung

Der Erfindung liegt nun die Aufgabe zugrunde, ein für die Organisation und Betreibung von Messen und Ausstellungen bestimmtes, neuartiges Verfahren zur Auswahl, Erfassung und Sammlung von Dokumenten, Prospekten und dergleichen zu schaffen, mit welchem die vorgenannten Nachteile vermieden werden.

Diese Aufgabe wird durch ein Verfahren mit den Merkmalen des Patentanspruchs 1 gelöst.

Die Erfindung betrifft ferner eine Anordnung zur Durchführung eines Verfahrens gemäss Anspruch 1, nämlich eine Anordnung gemäss Anspruch 8 oder 9.

Vorteilhafte Ausführungsformen der Erfindung sind Gegenstand der abhängigen Ansprüche.

Erfindungsgemäss registriert und identifiziert sich der Messebesucher mit seiner Eintrittskarte oder einem speziellen Ticket an denjenigen Messeständen, von welchen er Daten, wie zum Beispiel Prospektunterlagen, wünscht. Diese Registrierung erfolgt über einen dem Aussteller zugeordneten Messestand-Kartenleser, mit welchem ein auf der Eintrittskarte oder dem Ticket enthaltender Identifikationscode erfasst wird. Als Identifikationscode dient hierbei insbesondere ein Zahlencode, ein Streifencode bzw. ein Barcode, oder ein Chip. Gleichzeitig wählt der Besucher die Daten, bzw. die Dokumentationen oder Prospekte des entsprechenden Ausstellers elektronisch aus, was durch Registrierung von den Prospekten bzw. Dokumenten zugeordneten Dokumentencodes erfolgt. Diese Auswahl wird dann zum Beispiel als Zahlencode entweder auf der allenfalls ein elektronisches Speichermedium enthaltenden Eintrittskarte, beispielsweise auf einer Chipkarte, gespeichert, oder direkt an eine Besucher-Datenbank übermittelt und dort in einer dem Besucher zugeordneten Datei gespeichert.

Erfindungsgemäss werden die Daten aller Aussteller in einer separaten Datenbank erfasst. Diese auf einem separaten Server gespeicherte Aussteller-Datenbank ist vorzugsweise so ausgebildet, das Aussteller-spezifische Daten der nachfolgenden Art einzeln oder in Kombination miteinander erfasst und von den Besuchern abgerufen werden können, wobei jedem Aussteller noch zusätzlich automatisch eine ihn identifizierende Ausstellernummer zugeordnet wird.
Aussteller-spezifische Daten sind:
- Beschreibung des Ausstellers (zum Beispiel Adresse(n), Firmenprofil etc.)
- Suchbegriffe analog Messekatalog
- Prospektunterlagen in Form von Dokumentdateien, wie zum Beispiel rtf-, doc-, xls, oder pdf-Dateien
- HTML Dokumente
- E-Mail Adresse(n)
- Internet-Adresse(n) zum direkten Zugang zu Dokumentations- und Prospektinformationen des Ausstellers via Internet
- Multimedia-Dateien für z.B. Bilder, Videos und Animationen

Falls die Prospekt-Auswahl eines Besuchers an die Besucher-Datenbank übermittelt und dort gespeichert wird, ist die Besucher-Datenbank so mit der Aussteller-Datenbank gekoppelt, dass nach der Identifizierung und Registrierung an einem Messestand die vom entsprechenden Aussteller Besucherspezifisch ausgewählten Daten, zum Beispiel Dokumente und Prospekte, von der Aussteller-Datenbank in die persönliche, dem Besucher zugeordnete Datei eingebunden oder allenfalls kopiert werden. Am Ende des Messebesuches kann der Besucher dann die in seiner in der zentralen Datenbank enthaltenen Datei eingebundenen Aussteller-Daten an einem Terminal abrufen und auf Diskette(n), CD-Rom oder DVD kopieren.

Falls die Prospekt-Auswahl in Form mindestens eines Codes auf einer ein elektronisches Speichermedium enthaltenden Eintrittskarte gespeichert wird, sind die Messestand-Kartenleser noch zusätzlich als Schreibgeräte ausgebildet. Diese schreiben dann die den gewünschten Aussteller-Daten, beispielsweise den Prospekten bzw. Dokumenten, zugeordneten Dokumentencodes auf die Eintrittskarte, so dass der Besucher die an einem Messestand ausgewählten Aussteller-Daten erst am Ende des Messebesuches von der Aussteller-Datenbank Besuchersepzifisch zusammenstellt und auf Diskette(n), CD-Rom oder DVD kopiert, und zwar unter Verwendung der Chipkarte an einem Computer-Terminal, das mit dem die Aussteller-Datenbank enthaltenden Server verbunden ist.

Selbstverständlich besteht auch die Möglichkeit, sich die während des Besuches ausgewählten Prospekte und Dokumentationen per e-Mail über das Internet zusenden oder an der Messekasse ausdrucken oder in Papierform per Post zustellen zu lassen. Die ausgewählten Prospekte und Dokumentationen der Aussteller können aber, falls in der Aussteller-Datenbank Internet-Adressen zum direkten Zugang zu Dokumentations- und Prospektinformationen des Ausstellers enthalten sind, auch auf einen Internetserver übertragen und dort gespeichert werden, wovon sie beispielsweise mit einem Login und einem Passwort abrufbar sind.

Falls die ausgewählten Unterlagen in elektronisch gespeicherter Form übernommen werden, können die erfindungsgemäss gesammelten Unterlagen und Prospekte zu Hause oder in der Firma mittels bekannter Software, zum Beispiel mittels eines üblichen Browsers, auf einem Computer angesehen und ausgewertet werden, wobei noch zusätzlich die Möglichkeit besteht, Informationen verschiedener Messen und Ausstellungen auf dem eigenen Computersystem zusammenzuführen und gemeinsam zu verwalten.

Bei einer bevorzugten Ausführungsform der Erfindung, ist das Messestand-Lesegerät so ausgebildet, dass der Besucher am Messestand auch nur einzelne Produkte des Ausstellers auswählen kann, die ihn im Speziellen interessieren und von welchen er Unterlagen und Prospekte wünscht.

Bei einer weiteren bevorzugten Ausführungsform der Erfindung, weist die zur Durchführung des erfindungsgemässen Verfahrens dienende Einrichtung noch zusätzlich eine Datenbank mit Steuerdateien für die Initialisierung und Konfiguration der Messestand-Lesegeräte auf. Diese Datenbank ermöglicht dabei, die Lesegeräte individuell zu konfigurieren, so zum Beispiel abhängig vom Messeplatz auf eine bestimmte Benutzersprache einzustellen.

Das erfindungsgemässe Verfahren stellt dem Messebesucher die Messeinformationen so zur Verfügung, dass er keine mit Papier gefüllten Taschen nach Hause nehmen muss. Für Firmen besteht zudem die Möglichkeit, die Unterlagen so auf einem Server zu archivieren, dass diese über das firmeneigene Intranet jedem Mitarbeiter jederzeit zur Verfügung steht.

Die Registrierung bei den einzelnen Ausstellern kann der Besucher entweder anonym oder mit Angabe der Adresse durchführen. Er kann also wahlweise dem Aussteller seine Adresse in elektronischer Form hinterlassen. Lässt er seinen Namen registrieren, beispielsweise an der Messe-Kasse oder bei der ersten Identifizierung an einem separaten Terminal oder an einem Messestand, werden seine Besuche elektronisch registriert und den Ausstellern zugänglich gemacht, wozu beispielsweise jedem Aussteller eine Datei zugeordnet wird, in welcher die beim ihm registrierten Besuche namentlich gespeichert werden.

Nicht nur dem Besucher, sondern auch dem Aussteller bietet das erfindungsgemässe Verfahren enorme Vorteile. So müssen die Aussteller weniger Prospekte drucken lassen, was nicht nur Kostenvorteile sondern auch einen umweltschonenden Papierverbrauch zur Folge hat, und es können die für die Ausstellung bzw. Messe vorbereiteten und in der Datenbank zusammengeführten Prospektunterlagen verhältnismässig kurzfristig und einfach mit neuen Informationen und Unterlagen ergänzt und aktualisiert werden. Zudem lassen sich die Adressen der an den einzelnen Ständen registrierten Messebesucher verhältnismässig einfach registrieren und am Ende der Messe den jeweiligen Ausstellern auf einem Datenträger oder per e-Mail zusenden. Alles in allem vereinfacht das erfindungsgemässe Verfahren auch die administrativen Aufgaben der Messebetreiber, so dass sich deren Personal vermehrt den Verkaufs- und Beratungsgesprächen widmen kann.

Der dem erfindungsgemässen Verfahren zugrunde liegende Datenbanktyp ist frei wählbar, und zum Beispiel VISUAL FOX-PRO. Das gleiche gilt auch für das der Datenbank zugrunde liegende Computerbetriebssystem, das beispielsweise WINDOWS NT sein kann.

### Kurze Beschreibung der Zeichnung

Nachfolgend wird anhand der beiliegenden Zeichnung ein Ausführungsbeispiel der Erfindung beschrieben. In der Zeichnung zeigt
Die Figur 1 eine Prinzip-Skizze einer erfindungsgemässen Anordnung, so wie sie an einer Messe oder Ausstellung in Betrieb genommen wird, und
die Figur 2, eine Prinzip-Skizze zur Archivierung, Verwaltung und Benutzung der papierlos gespeicherten Prospektunterlagen.

### Beschreibung der bevorzugten Ausführungsbeispiele

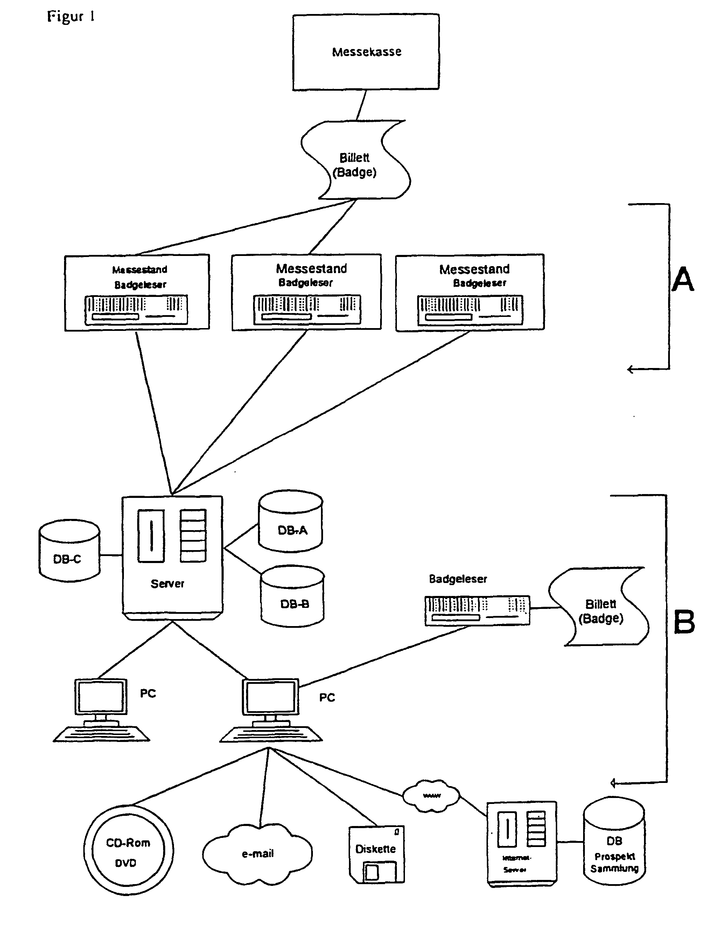

Mit dem in der Figur 1 gezeigten Messe-Billet, auch Badge genannt, registriert und identifiziert sich der Messebesucher an den verschiedenen Messeständen. Zu diesem Zweck weist das Billet einen Barcode, einen Zeichencode, einen codierten Magnetstreifen oder einen Chip auf.

An jedem Messestand ist ein Karten-Lesegerät (Badgeleser) zum Lesen des auf dem Badge enthaltenden Besucher-Identifizierungscodes vorhanden. Ein solches Gerät ist dabei wahlweise als Laserscanner zum Lesen des Bar- oder Zeichencodes oder als Magnetstreifenleser oder als Chip-Lesegerät ausgebildet. Bei einer Registrierung werden insbesondere Messestandnummer bzw. Ausstellernummer und Billetnummer erfasst und an einen die Besucher-Datenbank (DB-C) und Aussteller-Datenbank (DB-A) enthaltenden Server übermittelt.

Das Messestand-Lesegerät kann hierbei so ausgebildet sein, dass es die erfassten Daten direkt an den Server übermittelt, was wahlweise über ein Datenkabel oder kabellos, z.B. via Funk oder Infrarot-Strahlung, erfolgen kann. Das Messestand-Lesegerät kann aber auch an einem lokalen Computer des Ausstellers angeschlossen sein, so dass noch weitere Registrierungs- und Datenerfassungsprozesse durchgeführt werden können, wobei dann in diesem Fall der lokale Computer des Ausstellers mit der Besucher-Datenbank verbunden ist.

Anhand der an den Server übermittelten Daten werden die gesammelten Informationen zusammengestellt und die dafür nötigen Aussteller-Daten, beispielsweise Prospektunterlagen in Form von Dokumentdateien, HTML Dokumente, E-Mail Adresse(n), Internet-Adresse(n) zum direkten Internet-Zugang zu Dokumentations- und Prospektinformationen des Ausstellers oder Multimedia-Dateien für z.B. Bilder, Videos und Animationen aus der Aussteller-Datenbank (DB-A) in die jedem einzelnen Besucher zugeordneten Datei eingebunden.

Beim Verlassen der Messe kann der Besucher schliesslich die gesammelten Daten an einem Computerterminal (PC) anhand der Billetnummer abrufen und z.B. auf CD-ROM, Diskette(n) oder DVD abspeichern oder sich über einen WEB-Server via e-Mail übermitteln lassen.

Das erfindungsgemässe Verfahren kann auch so ausgebildet sein, dass die Registrierung der Besucheradresse erst beim Verlassen der Messe erfolgt, also bei der Sitzung des Besuchers an einem der Computerterminals (PC). Für diesen Zweck muss sich der Besucher mit seinem Badge am Terminal (PC) identifizieren und seine persönlichen Daten über die Tastatur eingeben oder mittels eines digitalen Gerätes, beispielsweise mittels eines Natels, einlesen lassen. In diesem Fall sieht das erfindungsgemässe Verfahren vor, dass die Adresse dann an diejenigen Messestände weitergegeben wird, an welchen der Besucher Informationen verlangt hat. Ohne Angabe der Adresse bleibt der Besucher anonym.

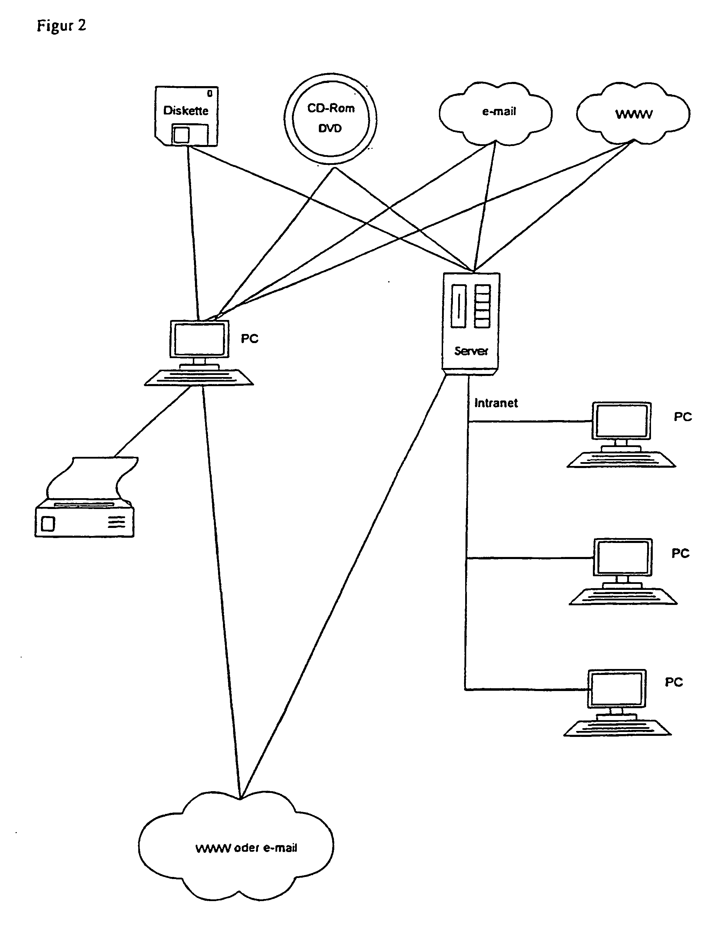

Wie aus der Figur 2 ersichtlich ist, hat der Messebesucher alle gesammelten Messe-Informationen in elektronischer Form zu Hause oder in der Firma zur Verfügung. Die gesammelten Prospekte können daher problemlos auf einem PC oder einem Server gespeichert werden. Die Informationen können darüber hinaus auch im Intranet des Besuchers publiziert werden und stehen jedem Firmen-Mitarbeiter zur Verfügung.

Ferner können die Informationen, welche man an der Messe gesammelt hat, nach verschiedenen Kriterien offline ausgewählt, angesehen oder ausgedruckt werden. Ist eine e-Mail Adresse des Ausstellers angegeben, so können sofort weitere Informationen oder Angebote via e-Mail eingeholt werden. Stehen Internet-Adressen der Aussteller zur Verfügung, so können direkt diese Adressen abgerufen werden. Es kann also direkt via e-Mail und/oder Internet mit den Ausstellern kommuniziert werden, und es können die verschiedensten Arten von Dokumentationen, auch Multimedia-Dateien, via Internet eingeholt werden, und dies selbstverständlich auch noch nach dem Messebesuch. Insbesondere die Einbindung des Internets in das erfindungsgemässe Verfahren ist ein bedeutender Vorteil der hier vorliegenden Erfindung gegenüber dem eingangs genannten Stand der Technik.

## Patentansprüche

1. Verfahren zur Auswahl, Erfassung und Sammlung von Ausstellerdaten an einem Stand einer Messe oder Ausstellung, wobei ein Messebesucher an einem ausgewählten Stand mittels eines dem Aussteller zugeordneten Lesegeräts einen auf seinem Billet enthaltenden Identifizierungscode elektronisch einliest und damit eine Verbindung zwischen einer auf einem zentralen Server gespeicherten Aüsstellerdatenbank und einer ebenfalls auf dem zentralen Server gespeicherten, dem Besucher zugeordneten Besucherdatenbank auslöst, Dokumentencodes einer vom Besucher getroffenen Auswahl von am Messestand verfügbaren Daten von der Ausstellerdatenbank in die Besucherdatenbank übertragen werden und die von verschiedenen Messeständen in der Besucherdatenbank gespeicherten Daten abgerufen, auf einen Datenträger kopiert und/oder elektronisch zu einer vom Besucher zu bestimmenden Adresse übertragen werden.

2. Verfahren nach Anspruch 1, **dadurch gekennzeichnet, dass** als Identifizierungscode ein Streifencode, ein Zeichencode, ein codierter Magnetstreifen oder ein Chip dient.

3. Verfahren nach Anspruch 1 oder 2, **dadurch gekennzeichnet, dass** dem Identifizierungscode als wesentliches Element eine fortlaufende Ticketnummer zugeordnet wird.

4. Verfahren nach einem der Ansprüche 1 bis 3, **dadurch gekennzeichnet, dass** als Kennzeichen für einen Messestand oder einen Aussteller eine Ausstellernummer dient.

5. Verfahren nach einem der Ansprüche 1 bis 4, **dadurch gekennzeichnet, dass** die Aussteller-Daten folgende Datengruppen umfassen, die einzeln oder in Kombination miteinander erfasst und abgerufen werden können
- Beschreibung des Ausstellers zum Beispiel Adresse(n), Firmenprofil etc.;
- Suchbegriffe analog Messekatalog;
- Prospektunterlagen in Form von Dokumentdateien, wie zum Beispiel rtf-, doc-, xls, oder pdf-Dateien;
- HTML Dokumente;
- E-Mail Adresse(n);
- Internet-Adresse(n) zum direkten Zugang zu Dokumentations- und Prospektinformationen des Ausstellers via Internet;
- Multimedia-Dateien für z.B. Bilder, Videos etc..

6. Verfahren nach einem der Ansprüche 1 bis 5, **dadurch gekennzeichnet, dass** der Identifizierungscode des Billets und das dem Messetand zugeordnete Kennzeichen über ein Datenkabel oder kabellos an den Server übermittelt wird.

7. Anordnung zur Durchführung eines Verfahrens gemäss einem der Ansprüche 1 bis 6, **gekennzeichnet durch** Ausstellern zugeordnete Lesegeräte zur Erfassung eines besucherspezifischen Identifizierungscodes, einen mit den Lesegräten verbundenen, zentralen Server enthaltend eine Besucherdatenbank und eine Ausstellerdatenbank, Mittel zur Verbindung der Besucherdatenbank mit der Ausstellerdatenbank und mindestens ein am Server angeschlossenes Computerterminal für den Abruf und die Verarbeitung der an den verschiedenen Messeständen elektronisch ausgewählten und in die Besucherdatenbank eingebundenen oder kopierten, besucherspezifischen Ausstellerdaten.

8. Anordnung nach Anspruch 7, **dadurch gekennzeichnet, dass** noch zusätzlich eine Datenbank mit Steuerdateien für die Initialisierung und Konfiguration der Messestand-Lesegeräte vorgesehen ist, die es ermöglicht, die Lesegeräte individuell zu konfigurieren und auf eine bestimmte Benutzersprache einzustellen.

## Claims

1. Method of selecting, taking and collecting of exhibitors data at a booth of a fair or an exhibition, whereby a visitor at a selected booth electronically reads in an identification code contained on his ticket by means of a reading device associated with the respective exhibitor thereby establishing a connection between an exhibitor data base stored on a central server and a visitor data base related to the respective visitor and equally stored on the central server, document codes of a selection of data available at the fair booth and defined by the visitor are transferred from the exhibitor data base to the visitor data base, and, the data from the various fair booths being stored in the visitor data base are retrieved and copied on a data carrier and/or transmitted electronically to an address determined by the visitor.

2. Method according to claim 1, **characterised by** the fact that the identification code is constituted by a bar code, a symbol code, a coded magnetic strip or a chip.

3. Method according to claim 1 or 2, **characterised by** the fact that a consecutive ticket number is associated with the identification code as an essential element.

4. Method according to one of claims 1 to 3, **characterised by** the fact that an exhibitor number is used as an identification of a fair booth or an exhibitor.

5. Method according to one of claims 1 to 4, **characterised by** the fact that the exhibitor data comprise the following groups of data which can be taken and retrieved individually or in combination with each other
- description of the exhibitor, e.g. address(es), company profile etc.;
- search keys according to a fair catalogue;
- prospectus material in the shape of document data files, such as rtf-, doc-, xls, oder pdf-files;
- HTML documents;
- e-mail address(es);
- internet-address(es) for direct access to documentation and prospectus information of the exhibitor via internet;
- multimedia files for e.g. pictures, videos etc.

6. Method according to one of claims 1 to 5, **characterised by** the fact that the identification code of the ticket and the identification related to the fair booth are transmitted via a data cable or wireless to the server.

7. A system for performing a method according to one of claims 1 to 6, **characterised by** reading devices associated with exhibitors for taking a visitor-specific identification code, a central server connected to the reading devices, the server containing a visitor data base and an exhibitor data base, means for connecting the visitor data base to the exhibitor data base and at least on computer terminal connected to the server for retrieving and processing the visitor-specific exhibitor data which have been electronically selected and read or copied into the visitor data base at the various fair booths.

8. A system according to claim 7, **characterised by** the fact that in addition a data base containing control files for initialising and configuring the fair booth reading devices is provided, which data base allows individual configuration of the reading devices and adjusting them to a certain user language.

## Revendications

1. Un procédé pour la sélection, la saisie et l'acquisition de données d'exposants à un stand d'une foire ou d'une exposition, où un visiteur de la foire entre de manière électronique un code d'identification qui est contenu sur son billet à un stand sélectionné au moyen d'un lecteur qui est affecté à l'exposant et déclenche ainsi une liaison entre une base de données des exposants, sauvegardée sur un serveur central, et une base de données des visiteurs affectée aux visiteurs, également sauvegardée sur le serveur central, des codes de documents de données qui sont disponibles au stand de foire, selon une sélection effectuée par le visiteur, sont transférés de la base de données des exposants vers la base de données des visiteurs et les données sauvegardées dans la base de données des visiteurs par les différents stands de foire sont rappelées, copiées sur un support de données et/ ou transférées électroniquement à une adresse déterminée par le visiteur.

2. Un procédé selon la revendication 1, **caractérisé en ce que** le code d'identification est un code à barres, un code de caractères, une bande magnétique codée ou une puce.

3. Un procédé selon les revendications 1 ou 2, **caractérisé en ce que** l'on attribue au code d'identification un numéro de ticket continu en tant qu'élément essentiel.

4. Un procédé selon l'une quelconque des revendications 1 à 3, **caractérisé en ce qu'**un numéro d'exposant sert d'identifiant pour un stand de foire ou un exposant.

5. Un procédé selon l'une quelconque des revendications 1 à 4, **caractérisé en ce que** les données de l'exposant comprennent les groupes de données suivants, celles-ci peuvent être saisies et rappelées seules ou en combinaison ensemble
- une description de l'exposant, par exemple une (ou des) adresse(s), profil de la société etc. ;
- des critères de recherche analogue au catalogue de la foire ;
- des documentations sous forme de fichiers de documents, tels que par exemple des fichiers rtf, doc, xls ou pdf ;
- des documents HTML.
- une (ou des) adresse(s) e-mail ;
- une (ou des) adresse(s) internet pour l'accès direct aux informations des documentations et des prospectus de l'exposant via intemet ;
- des fichiers multimédias par exemple pour des images, vidéos etc..

6. Un procédé selon l'une quelconque des revendications 1 à 5, **caractérisé en ce que** le code d'identification du billet et l'identifiant affecté au stand de foire sont transférés sur le serveur à travers un câble de donnés ou sans câble.

7. Une configuration pour la réalisation d'un procédé selon l'une quelconque des revendications 1 à 6, **caractérisée en** des lecteurs affectés aux exposants pour la saisie d'un code d'identification spécifique au visiteur, un serveur central, relié aux lecteurs comprenant une base de données des visiteurs et une base de données des exposants, des moyens pour relier la base de données des visiteurs à la base de données des exposants et au moins un terminal d'ordinateur connecté au serveur pour le rappel et le traitement des données des exposants spécifiques au visiteur, qui ont été sélectionnées de façon électronique aux différents stands de foire et intégrées ou copiées dans la base de données des visiteurs.

8. Une configuration selon la revendication 7, **caractérisée en ce qu'**une base de données additionnelle est prévue avec des fichiers pilotes pour l'initialisation et la configuration des lecteurs des stands de foire, qui permet de configurer chaque lecteur individuellement et de le régler dans une certaine langue utilisateur.
